# EUROPÄISCHE PATENTSCHRIFT

(11) **EP 0 786 613 B1**
(45) Veröffentlichungstag und Bekanntmachung des Hinweises auf die Patenterteilung: **17.10.2001**
(21) Anmeldenummer: 97100837.0
(22) Anmeldetag: 21.01.1997
(51) Int. Cl.: F16K 31/60

(54) **Befestigung eines Betätigungsgriffs an einer Sanitärarmatur**
Fixing of an actuator handle on a sanitary valve
Fixation d'un levier de commande à une vanne sanitaire

(30) Priorität: 23.01.1996 DE 19602158; 30.11.1996 DE 19649774
(43) Veröffentlichungstag der Anmeldung: 30.07.1997
(73) Patentinhaber: Hansgrohe AG, 77761 Schiltach (DE)
(72) Erfinder: Kronenbitter, Bernd, D-72275 Alpirsbach-Römlinsdorf (DE); Ginter, Gerhard, D-78144 Tennebronn (DE)
(74) Vertreter: Patentanwälte Ruff, Wilhelm, Beier, Dauster & Partner

(56) Entgegenhaltungen:
- EP-A- 0 115 032
- DE-A- 3 428 287
- US-A- 2 305 099
- US-A- 5 025 826

## Beschreibung

Die Erfindung geht aus von einer Sanitärarmatur, die mit Hilfe eines Steuerhebels betätigt wird. Beispielsweise kann es sich um eine Einhebel-Armatur handeln, bei der die Verschwenkung des Hebels zur Steuerung der Ausströmmenge und die Verdrehung des Hebels um seine eigene Längsachse das Mischungsverhältnis zwischen warmem und kaltem Wasser bestimmt.

Üblicherweise werden die Griffe derart an dem freien Ende des Steuerhebels befestigt, daß das freie Ende des Steuerhebels in eine Aufnahme im Betätigungsgriff eingeschoben wird. Anschließend wird eine Klemmschraube, die in einer Gewindebohrung des Handgriffs angeordnet ist, festgeschraubt, die den Steuerhebel quer zur Längsachse beaufschlagt.

Bei einer bekannten Befestigungsanordnung (EP-A2-115 032) weist der Steuerhebel und die ihm zugeordnete Aufnahme des Griffs einen quadratischen Querschnitt auf. Eine Klemmschraube, die in eine Gewindebohrung des Griffs eingeschraubt wird, beaufschlagt den Schaft quer zu dessen Längsrichtung.

Bei diesen bekannten Arten der Befestigung besteht die Gefahr, daß sich die Befestigung lockert. Der Erfindung liegt die Aufgabe zugrunde, eine Befestigungsmöglichkeit zu schaffen, bei der trotz der an sich bewährten Befestigungsmöglichkeit mit einer Klemmschraube die Gefahr des Lockerns verringert wird.

Zur Lösung dieser Aufgabe schlägt die Erfindung eine Befestigungsmöglichkeit für eine Sanitärarmatur mit den im Anspruch 1 aufgeführten Merkmalen vor. Weiterbildungen der Erfindung sind Gegenstand von Unteransprüchen.

Die beiden Flächen, die auch Teile einer durchgehenden Umfangsfläche sein können, schließen einen Keilwinkel miteinander ein, der beispielsweise kleiner als 45° ist. Als besonders günstiges Beispiel seien 20° genannt. Die Klemmschraube verschiebt den Steuerhebel in dem zwischen den beiden Anlageflächen gebildeten Winkel, so daß eine kleine Erhöhung der Anpressung zu einer guten Klemmfestlegung zwischen den beiden Anlageflächen führt. Üblicherweise weist auch der Steuerhebel in seinem Befestigungsbereich zwei Flächen auf, die den gleichen Keilwinkel miteinander einschließen. Bei der nach der Erfindung durchgeführten seitlichen Verklemmung kann jedoch auch ein gewisser Toleranzausgleich erfolgen, so daß die tatsächliche Winkelgenauigkeit zwischen Aufnahme und Steuerhebel nicht kritisch ist.

Ein besonders günstiges Beispiel für die Ausgestaltung der Aufnahme bzw. des freien Endes des Steuerhebels besteht darin, diesem die Querschnittsform eines Trapez zu geben. Die beiden schräg verlaufenden Flächen des Trapez bilden dann die Anlageflächen, die an den entsprechenden Gegenflächen der Aufnahme anliegen, während die breitere Seite zum Angriff des Befestigungselementes dient. Durch die Trapezform wird eine nur wenig von einem quadratischen Querschnitt abweichende Form geschaffen, so daß der Steuerhebel stabil und massiv bleibt.

In Weiterbildung der Erfindung kann vorgesehen sein, daß die Anlageflächen auch in einem Längsschnitt durch die Aufnahme einen Keilwinkel miteinander einschließen. In diesem Fall kann nicht nur ein seitliches Festklemmen, sondern auch ein Festklemmen in Längsrichtung erfolgen, wobei die Klemmbewegung ein schräges Beaufschlagen sein kann.

Es kann erfindungsgemäß vorgesehen sein, daß das an die Anlageflächen angepaßte Ende des Steuerhebels sich in Richtung auf das freie Ende des Steuerhebels hin verjüngt. Es kann auf diese Weise durch das klemmende Festlegen auch eine Zentrierung erfolgen.

Insbesondere kann vorgesehen sein, daß das freie Ende des Steuerhebels eine Art Pyramidenform aufweist, wobei hier insbesondere eine ungleichmäßige Pyramide in Frage kommt.

Ebenfalls möglich ist es, daß das freie Ende des Steuerhebels eine Art Kegelform oder Kegelstumpfform aufweist. Auch die im Querschnitt kreisbogenförmig gekrümmten Anlageflächen schließen dabei über einen Teil ihres Umfangskeilwinkels zwischeneinander ein.

Erfindungsgemäß kann in Weiterbildung vorgesehen sein, daß die Beaufschlagungsrichtung des Befestigungselementes schräg zur Längsachse des Steuerhebels und/oder der Aufnahme im Betätigungsgriff verläuft. Auf diese Weise kann durch die schräge Beaufschlagung sowohl ein seitliches Einklemmen als auch ein Klemmen in Längsrichtung erfolgen.

Erfindungsgemäß kann der Steuerhebel eine Angriffsfläche für das Befestigungselement aufweisen, die insbesondere senkrecht zu dem Angriffsende des Befestigungselementes verläuft. Die Angriffsfläche kann verstärkt ausgebildet sein, so daß keine Abnutzungserscheinungen auftreten. Der senkrechte Verlauf der Angriffsfläche gegenüber der Beaufschlagungsrichtung des Befestigungselementes führt dazu, daß die Verkeilung an den Anlagenflächen der Aufnahme und der Außenseite des Steuerhebels erfolgt und nicht an der Angriffsfläche selbst.

Erfindungsgemäß kann vorgesehen sein, daß der Steuerhebel mindestens teilweise aus Metall besteht, wobei insbesondere mindestens die Angriffsfläche metallisch ausgebildet ist. Hier ist die Beanspruchung am größten, so daß die metallische Ausbildung hier besonders sinnvoll ist.

Erfindungsgemäß kann der Steuerhebel insgesamt vollständig aus Metall hergestellt sein.

Da der Steuerhebel aber innerhalb der Mischarmatur mit Teilen des Mischventils zusammenwirken soll, kann erfindungsgemäß vorgesehen sein, den Steuerhebel aus einer Umspritzung eines metallischen Teils herzustellen, da die Kunststoffteile ggf. in einer Ventilkartusche zu einer geringeren Reibung führen.

Es ist möglich, den Steuerhebel mit einem metallischen Kern zu versehen, der von der Außenseite her umspritzt ist, wobei dann die Angriffsfläche metallisch frei bleibt.

Ebenfalls möglich ist es aber auch, ein metallisches Verstärkungselement mit einer Angriffsfläche mit dem Kunststoff so zu verbinden, daß dieser in ein hülsenartiges Inneres oder in den Raum zwischen zwei Schenkeln eines U-förmig gebogenen Bauteils eingespritzt wird.

Die Ausbildung des Befestigungselementes als Zugschraube bietet die Möglichkeit, ein großflächiges Angreifen zwischen dem Befestigungselement und dem Steuerhebel zu ermöglichen.

Insbesondere kann erfindungsgemäß vorgesehen sein, daß die Zugschraube eine den Endbereich des Steuerhebels durchquerende, insbesondere schräg durchquerende, Bohrung durchsetzt.

Zur Verwirklichung einer Zugbeanspruchung kann vorgesehen sein, daß die Zugschraube zwischen der Außenseite der Aufnahme und der entgegengesetzten Seite des Steuerhebels angreift. Dies kann beispielsweise durch ein an dem Ende der Zugschraube angebrachtes querverlaufendes Element geschehen, beispielsweise eine Querplatte.

Besonders günstig ist es jedoch, wenn die Zugschraube an der einen Seite mit einem Schraubenkopf und auf der gegenüberliegenden Seite mit einer Mutter versehen ist, so daß die Zugfestlegung zwischen der Unterseite des Schraubenkopfes und der Unterseite der Mutter erfolgen kann.

In nochmaliger Weiterbildung kann vorgesehen sein, daß die Querbohrung des Steuerhebels ein Gewinde aufweist, in das die Zugschraube eingreift. Damit erfolgt eine Beanspruchung längs der gesamten Gewindefläche, also längs einer großen Fläche. Die Elastizität des Schraubenschaftes kann in diesem Fall dazu beitragen, die Vorspannung zu erhalten.

In Weiterbildung kann vorgesehen sein, daß die Unterseite des Schraubenkopfes und/oder die Unterseite der Mutter eine Verrippung aufweist.

Zur weiteren Vergrößerung der Fläche, an der eine Beanspruchung erfolgt, kann erfindungsgemäß vorgesehen sein, daß zwischen der Außenseite der Aufnahme und dem Schraubenkopf bzw. der Mutter ein Verstärkungselement eingelegt ist, das beispielsweise aus Metall bestehen kann und großflächig ausgebildet ist, so daß es die Beanspruchung großflächig auf die Aufnahme an der Unterseite des Handgriffs überträgt.

Insbesondere kann vorgesehen sein, daß das freie Ende der Zugschraube in befestigtem Zustand über die gegenüberliegende Seite des Steuerhebels hinaus vorspringt und dort in eine Aufnahme, beispielsweise eine Bohrung, eingreift. Dieses Ende braucht nicht mit einem Gewinde versehen zu sein. Damit wird erreicht, daß auch bei einer Lockerung der Schraube der Griff nicht ohne weiteres, das heißt unabsichtlich, vom Steuerhebel abgenommen werden kann.

Weitere Merkmale, Einzelheiten und Vorzüge ergeben sich aus den Patentansprüchen, deren Wortlaut durch Bezugnahme zum Inhalt der Beschreibung gemacht wird, der folgenden Beschreibung einer bevorzugten Ausführungsform der Erfindung sowie anhand der Zeichnung. Hierbei zeigen:
- Fig. 1: eine Ansicht eines Handgriffs für ein Mischventil von unten;
- Fig. 2: einen Längsschnitt durch den Handgriff der Fig. 1;
- Fig. 3: in vergrößertem Maßstab einen schrägen Querschnitt durch die im Betätigungsgriff ausgebildete Aufnahme und das freie Ende eines Steuerhebels;
- Fig. 4: eine teilweise geschnittene Seitenansicht eines Steuerhebels;
- Fig. 5: eine teilweise geschnittene Seitenansicht des Steuerhebels der Fig. 4;
- Fig. 6: einen Querschnitt durch den Steuerhebel der Fig. 4 längs Linie VI-VI in Fig. 4;
- Fig. 7: eine Stirnansicht des Steuerhebels der Fig. 4 bis 6;
- Fig. 8: eine der Fig. 5 entsprechende Darstellung eines geänderten Steuerhebels;
- Fig. 9: einen schematischen Schnitt durch eine Befestigung des Handgriffs an dem Steuerhebel;
- Fig. 10: einen der Fig. 9 entsprechenden Schnitt bei einer weiteren Ausführungsform;
- Fig. 11: einen Schnitt längs Linie III-III in Fig. 10.
- Figur 12: einen der Figur 9 und der Fig. 10 entsprechenden Schnitt durch eine nochmals weitere Ausführungsform.

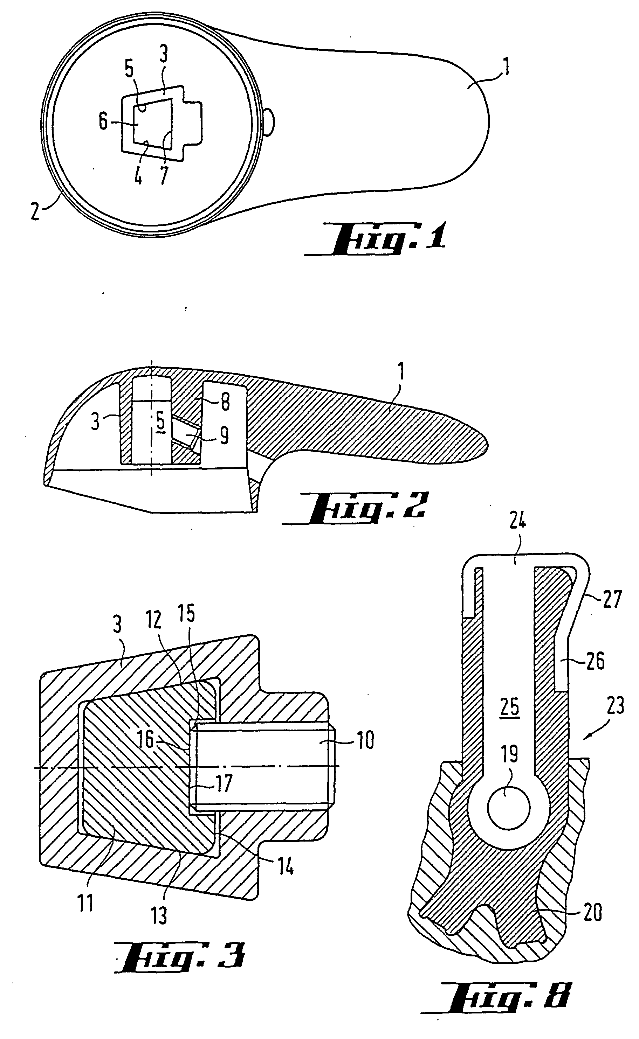

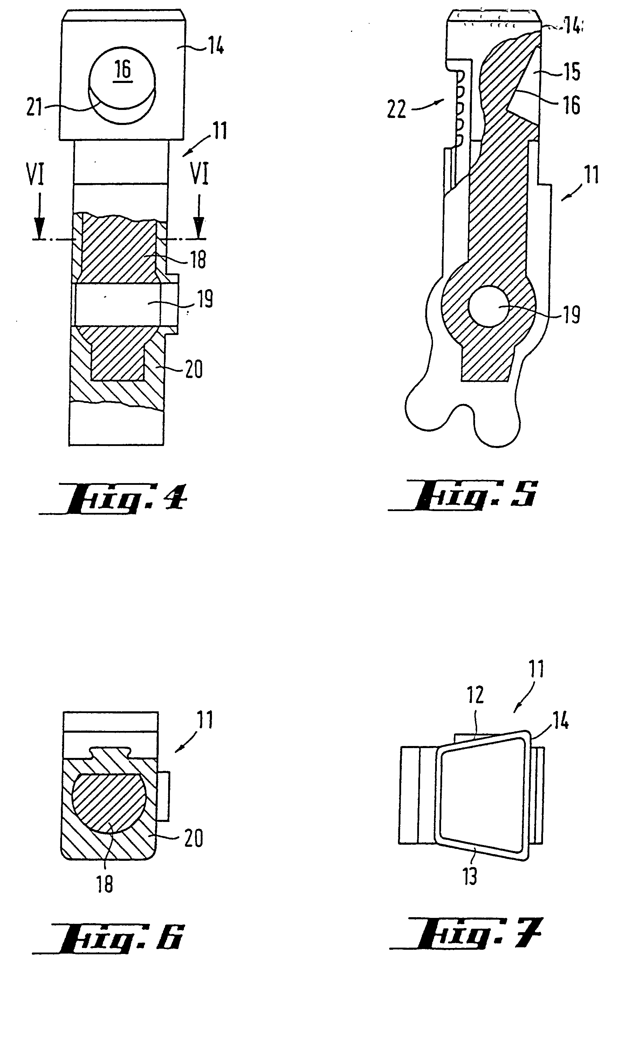

Fig. 1 und 2 zeigen einen in seiner Form üblichen Betätigungsgriff für eine Sanitärarmatur, die asymmetrisch ausgebildet ist. Rechts in Fig. 1 und 2 ist ein Angreifansatz 1 gebildet, an dem ein Benutzer anfassen kann. Der Betätigungsgriff weist eine Schürze 2 mit kreisförmigem Umfang auf, innerhalb der mittig eine Aufnahme 3 für das Einstecken eines Steuerhebels zur Betätigung der Mischarmatur angeformt ist. Die Aufnahme 3 stellt eine tiefe Ausnehmung dar, die im dargestellten Ausführungsbeispiel für ihre gesamte Tiefe im wesentlichen konstanten Querschnitt aufweist, mit Ausnahme der Entformungsschrägen. Die Aufnahme wird von vier Wänden gebildet, die aneinander anstoßen. Zwei einander gegenüberliegende Innenseiten 4, 5 der Aufnahme 3 bilden Anlageflächen, die miteinander einen Winkel von etwa 20° einschließen. Die beiden übrigen Innenseiten 6, 7 verlaufen parallel zueinander. In der die breitere Innenseite 7 bildenden Wand 8 ist eine Gewindebohrung 9 angeordnet. Die Achse dieser Gewindebohrung 9 verläuft in der Untenansicht der Fig. 1 senkrecht zu der Längsachse der Aufnahme 3 und in dem Schnitt der Fig. 2 leicht schräg gegenüber dieser Längsachse. Eine in der Gewindebohrung 9 angeordnete Klemmschraube 10 wirkt als Befestigungselement und beaufschlagt den Steuerhebel quer zur Längsachse der Aufnahme 3.

Fig. 3 zeigt in vergrößertem Maßstab einen Schnitt durch das in die Aufnahme 3 eingesetzte Ende des Steuerhebels 11. Der Querschnitt der Aufnahme 3 weist, wie bereits erwähnt, etwa Trapezform auf. Auch der Querschnitt durch das freie Ende des Steuerhebels 11 weist diese Trapezform auf, wobei der Abstand der beiden parallelen Begrenzungskanten der Trapezform des Steuerhebels 11 kleiner ist als der Abstand der beiden parallelen Innenseiten 6, 7 der Aufnahme 3. Der Keilwinkel zwischen den Anlageflächen 4, 5 der Aufnahme 3 und den Außenseiten 12, 13 des Endes des Steuerhebels 11 ist gleich. Dadurch liegen die den Keilwinkel miteinander einschließenden Außenseiten 12, 13 des Steuerhebels 11 an den entsprechenden Innenseiten 4, 5 der Aufnahme 3 flächig an.

In der breiteren Außenseite 14 des Steuerhebels 11 ist eine Vertiefung 15 gebildet, die eine ebene Angriffsfläche 16 bildet. An dieser ebenen Angriffsfläche 16 liegt das freie Ende 17 der Klemmschraube 10 flächig an. Wird die Klemmschraube 10, siehe Fig. 3, festgeschraubt, so beaufschlagt sie den Steuerhebel 11 quer zur Längsachse und schiebt den Steuerhebel in den Winkel ein, so daß hier eine Verklemmung auftritt. Dies führt zu einer spielfreien Festlegung des Betätigungsgriffs an dem Steuerhebel 11.

Fig. 4 zeigt nun einen Steuerhebel, wobei die in Fig. 3 rechts zu denkende breitere Außenseite 14 in Fig. 4 vorne ist.

Der Steuerhebel 11 weist einen Kern 18 aus Metall auf, der im Bereich seines unteren Endes mit einer quer verlaufenden Lagerbohrung 19 versehen ist. Um den Kern 18 herum ist der Rest des Steuerhebels 11 als Kunststoff-Spritzteil 20 ausgebildet.

Das in Fig. 4 obere Ende des Steuerhebels 11 ist dasjenige Ende, das beispielsweise aus der Ventilkartusche herausragt und mit dem Handgriff verbunden werden soll. Hier weist der Steuerhebel 11 die bereits erwähnte Trapezform auf. In der breiteren Fläche 14 ist eine Sacklochbohrung 21 ausgebildet, die die Vertiefung 15 bildet. Am Boden der Vertiefung 15 ist die Fläche 16 zu sehen. Die Vertiefung 15 ist so ausgebildet, daß die Angriffsfläche 16 Teil des metallischen Kerns 18 ist. Beim Umspritzen wird dieser Bereich also freigelassen.

Fig. 5 zeigt eine Seitenansicht des Steuerhebels 11, wobei wiederum die Vertiefung 15 zu sehen ist, deren Längsachse unter einem Winkel von etwa 30° zu der Längsachse des Steuerhebels 11 verläuft.

Auf der der Vertiefung abgewandten Seite des Steuerhebels ist eine Verzahnung 22 gebildet, die beispielsweise zur Anbringung einer Anschlagsbegrenzung und damit einer Verbrühsicherung dienen kann.

Fig. 6 zeigt einen Querschnitt durch den Steuerhebel 11, wobei hier zu sehen ist, daß der metallische Kern 18 an dieser Stelle des Querschnitts überall von dem umspritzten Kunststoffteil 20 umgeben ist.

Fig. 7 zeigt eine Stirnansicht des Steuerhebels 11, beispielsweise von oben in Fig. 5. Deutlich ist hier die Trapezform des Endbereiches des Hebels zu sehen, die in der bereits erläuterten Weise zur Verklemmung des Steuerhebels 11 in der Aufnahme 3 führt.

Während bei der Ausführungsform des Steuerhebels nach den Figuren 4 bis 7 ein metallischer Kern 18 von einem umspritzten Kunststoffteil 20 umgeben ist, zeigt Fig. 8 eine geänderte Version eines Steuerhebels 23, bei der ein gebogenes Blechteil 24 als Verstärkungsteil dient. Das Verstärkungsteil 24 weist zwei in Längsrichtung des Steuerhebels 23 verlaufende seitliche Schenkel 25 auf, die bis zu der Lagerbohrung 19 reichen und dort ebenfalls eine kreisrunde Öffnung aufweisen. Das Kunststoffmaterial 20 ist in dem Fall der Fig. 8 in den Raum zwischen die beiden Schenkel 25 eingespritzt.

Auch hier ist durch einen umgebogenen Lappen 26 eine schräg verlaufende Angriffsfläche 27 gebildet, die in der gleichen Weise orientiert ist wie der Boden 16 der Ausnehmung 15 bei der Ausführungsform der Fig. 4. Der Steuerhebel der Ausführungsform nach Fig. 8 wird in der gleichen Weise in die Aufnahme 3 des Betätigungsgriffes eingeschoben und dort mit Hilfe der Klemmschraube 10 verklemmt.

Der Querschnitt der Fig. 3 verläuft nicht exakt senkrecht zur Längsachse der Ausnehmung 3, sondern etwas schräg, so daß die Rotationsachse der Schraube 10 in dem Querschnitt liegt.

Während bei der dargestellten Ausführungsform die Aufnahme 3 für den Steuerhebel im Querschnitt eine Keil- bzw. Trapezform aufweist, ist es ebenfalls möglich, daß auch in einem Längsschnitt durch die Aufnahme 3 eine Keilform vorgesehen wird.

In diesem Fall wäre die Aufnahme in dem Schnitt der Fig. 2 mit einer Keilform versehen. In diesem Fall könnte das freie Ende des Steuerhebels 11 etwa die Form eines Pyramidenstumpfes oder aber, bei anderer Ausbildung, eines Kegelstumpfes aufweisen. Da aufgrund des schrägen Verlaufes der Klemmschraube 10 beim Festschrauben nicht nur eine Kraftkomponente quer zur Längsachse des Steuerhebels, sondern auch in dessen eigener Längsachse erzeugt wird, würde in diesem Fall also auch eine Zentrierung in Längsachse erfolgen.

Das Ende des Steuerhebels 11 in Fig. 9 weist eine gegenüber seiner Längsachse schräg verlaufende Bohrung 30 auf, die einen mit einem Innengewinde versehenen Einsatz aufweist.

Die Aufnahme 5 für das Ende des Steuerhebels 11 weist auf ihrer in Fig. 9 rechten Seite, das heißt der Seite, von der aus die Bedienung des Griffs erfolgt, eine im Querschnitt etwa U-förmige Einkerbung 31 auf, deren abgerundetes Ende Halbkreisform aufweist, zur Aufnahme des Schaftes 32 der Zugschraube 33.

In axialer Verlängerung des kreiszylindrischen Teils der Kerbe 31 ist in der gegenüberliegenden Wand der Aufnahme 5 ein durchgehendes glattes Loch 34 eingeformt.

In das Innengewinde des Einsatzes der Bohrung 30 oder in die Bohrung selbst ist die erwähnte Zugschraube 31 eingeschraubt. Sie liegt mit der Unterseite 35 ihres Schraubenkopfes 36 an der rechtwinklig zu der Längsachse der Schraube verlaufenden Außenseite der Aufnahme 5 an. Ein Festziehen der Schraube mit Hilfe eines Schraubenschlüssels zieht das Ende des Steuerhebels 11 in der Aufnahme 5 zwischen die beiden Seitenwände der Aufnahme, ähnlich wie dies bei der Aufnahme der Ausführungsform nach Figur 1 geschieht.

Das freie Ende 37 der Befestigungsschraube 33, das kein Gewinde aufweist, greift in die Öffnung 34 ein und verhindert bei einem Lockerwerden das vollständige Lösen des Handgriffs.

Zum Lösen der Zugschraube ist in axialer Verlängerung ihres Schaftes eine Durchbrechung 38 in dem Griff eingeformt, durch die beispielsweise ein Kreuzschlitz-Schraubendreher in Eingriff mit dem Schraubenkopf 36 gebracht werden kann. Die Befestigungsschraube 33 braucht nur so weit gelöst zu werden, bis ihr freies Ende nicht mehr in dem Loch 34 eingreift. Dann kann der Hebel nach oben abgezogen werden. Das Loch 34 braucht nur klein zu sein, da nur das Werkzeug selbst durch es hindurchpassen muß.

Die Armatur kann mit in dem Steuerhebel 11 eingesetzter Befestigungsschraube 33 geliefert werden.

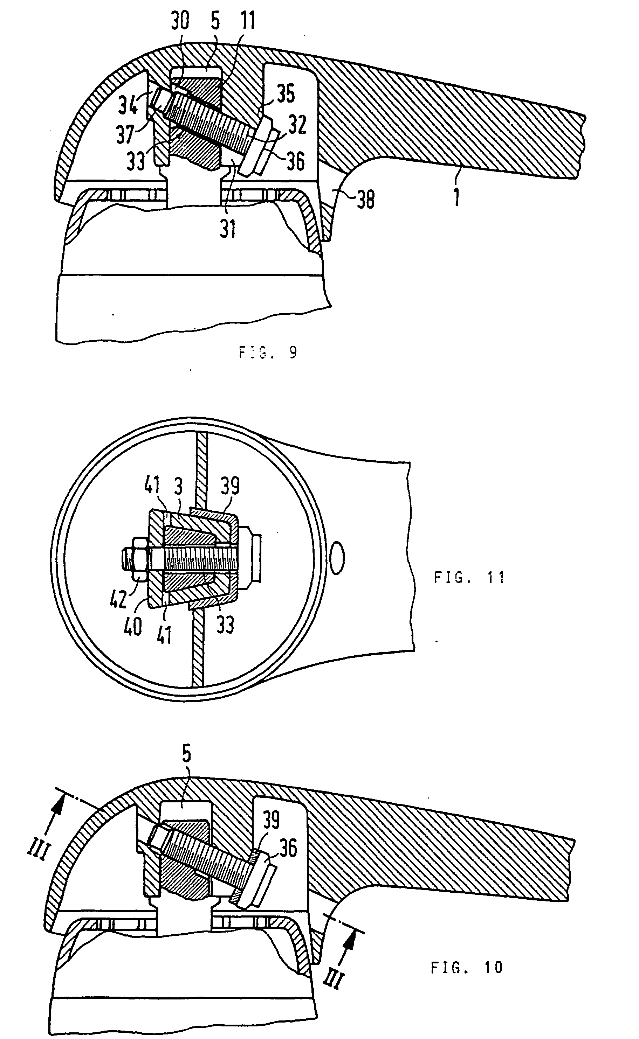

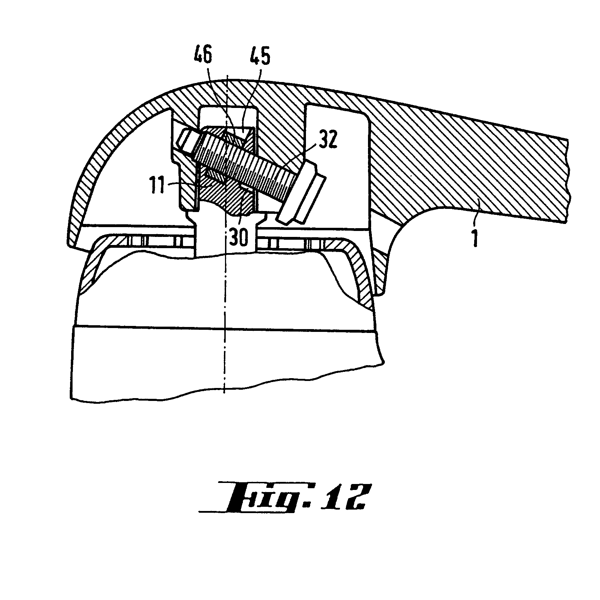

Bei der Ausführungsform nach Fig. 10 ist zwischen die Außenseite der Aufnahme 5 und die Unterseite des Schraubenkopfes 36 ein Verstärkungselement 39 eingesetzt, dessen Querschnitt etwa U-förmig ist, siehe Fig. 11. Dieses Verstärkungselement 39 dient dazu, die beim Festdrehen der Zugschraube auftretenden Kräfte gleichmäßig auf die Außenseite der Aufnahme zu verteilen.

Fig. 11 zeigt einen Schnitt etwa längs Linie III-III in Fig. 10, jedoch bei einer leicht abgeänderten Ausführungsform.

Die im Querschnitt längste Wand 40 der Aufnahme 3 ist von den übrigen Teilen der Aufnahme durch je einen schmalen Schlitz 41 getrennt. Dadurch ist die Wand 40, die an der Innenseite des Griffes in gleicher Weise angeformt ist wie die übrigen Wände der Aufnahme 3, leicht bewegbar ausgebildet.

Die Zugschraube 33 greift durch die Öffnung 34 der Wand 40 hindurch, und auf ihr freies Ende ist eine Mutter 42 aufgeschraubt. Bei der Ausführungsform der Fig. 11 greift die Schraube also nicht in ein Gewinde des Steuerhebels, sondern in ein Gewinde der Mutter 42. Beim Festdrehen wird die leicht bewegbare Wand 40 dann gegen den Steuerhebel gezogen, so daß dieser ebenfalls in das Innere der trapezförmigen Aufnahme 3 hineingezogen wird.

Bei der Ausführungsform der Fig. 11 kann der Steuerhebel so ausgebildet sein, daß die Bohrung 30, durch die der Schaft 32 der Schraube 33 hindurchgeht, in Richtung auf das freie Ende des Steuerhebels 11 offen ist, also als ein im Querschnitt U-förmiger Schlitz ausgebildet ist. Dann läßt sich bei fabrikmäßig vormontierter Zugschraube 33 der Griff von oben auf den Steuerhebel aufsetzen.

Die Ausbildung der verschwenkbaren Wand 40 kann so gestaltet werden, daß beim Heranziehen dieser Wand 40 auch ein Formschluß erfolgt, daß also beispielsweise ein vorspringender Teil am freien Ende der Wand 40 in eine entsprechende Ausnehmung des Steuerhebels 11 eingreift. Es kann auf diese Weise ein gleichzeitiges Anziehen des Steuerhebels in Richtung auf die kürzere Seite der trapezförmigen Aufnahme und in Richtung auf das Ende des Steuerhebels hin erfolgen.

Es ist natürlich auch möglich, je nach ausgewähltem Material, statt einer getrennten Mutter 42 in der Bohrung 34 selbst ein Gewinde anzuordnen.

Das Verstärkungselement 39, das eine der Trapezform der Aufnahme 3 angepaßte Innenform aufweist, dient ebenfalls dazu, die Aufnahme von drei Seiten her zu unterstützen.

Die Ausführungsform nach Fig. 12 ist der Ausführungsform nach Fig. 9 ähnlich, so daß nur noch die Unterschiede erläutert werden. Wiederum enthält das Ende des Steuerhebels 11 eine schräg verlaufende Bohrung 30, die kein Gewinde aufweist. Von dem freien Ende des Steuerhebels 11 ist in diesem eine Tasche 45 gebildet, die zur Aufnahme einer Mutter 46 dient. Die Tasche 45 ist so orientiert, daß sie zwei parallele Flächen aufweist, die die Mutter 46 zwischen einander einschließen. Diese Flächen verlaufen senkrecht zur Längsachse der Schraube 32, so daß die Schraube 32 durch die Gewindeöffnung der Mutter 46 eingeschraubt werden kann. Bei der Mutter 46 kann es sich um eine handelsübliche Vierkant- oder Sechskantmutter handeln, die durch die entsprechende Form der Tasche 45 an einem Mitdrehen gehindert wird.

Wiederum greift das freie Ende der Schraube 32 in eine Öffnung der dem Schraubenkopf gegenüberliegenden Wand der Aufnahme des Betätigungsgriffs 1 ein. Die Ausführungsform nach Fig. 12 hat den Vorteil, daß hier handelsübliche Teile verwendet werden können.

## Patentansprüche

1. Sanitärarmatur mit
1.1 einem Steuerhebel (11, 23) zur Betätigung der Armatur, wobei der Steuerhebel an seinem frein Ende einen kantigen Querschnitt aufweist,
1.2 einem Betätigungsgriff, der
1.2.1 eine im Querschnitt an das freie kantige Ende des Steuerhebels (11, 23) angepaßte Aufnahme (3) für den Steuerhebel (11, 23) sowie
1.2.2 ein Befestigungselement aufweist, das
1.2.2.1 das in die Aufnahme (3) angesetzte kantige Ende des Steuerhebels (11, 23) quer zu dessen Längsrichtung beaufschlagt, wobei
1.3 die Aufnahme (3) mindestens zwei Anlageflächen (4, 5) für den Steuerhebel (11, 23) aufweist,
1.3.1 gegen die das kantige Ende des Steuerhebels (11, 23) beaufschlagt wird, **dadurch gekennzeichnet, dass**
1.3.2 die mindestens zwei Anlageflächen (4, 5) in einem Querschnitt durch die Aufnahme (3) unter einem Keilwinkel zueinander verlaufen.

2. Sanitärarmatur nach Anspruch 1, bei der das an die Aufnahme (3) des Betätigungsgriffs angepaßte Ende des Steuerhebels (11, 23) einen Trapezquerschnitt aufweist.

3. Sanitärarmatur nach Anspruch 1 oder 2, bei der die Anlageflächen (4, 5) auch in einem Längsschnitt durch die Aufnahme (3) einen Keilwinkel miteinander einschließen.

4. Sanitärarmatur nach einem der vorhergehenden Ansprüche, bei der das an die Aufnahme (3) angepaßte Ende des Steuerhebels (11, 23) sich in Richtung auf das freie Ende des Steuerhebels (11, 23) verjüngt.

5. Sanitärarmatur nach Anspruch 4, bei der das an die Aufnahme (3) angepaßte Ende des Steuerhebels (11, 23) Pyramidenstumpfform aufweist und/oder Kegelform bzw. Kegelstumpfform aufweist.

6. Sanitärarmatur nach einem der vorhergehenden Ansprüche, bei der die Beaufschlagungsrichtung des Befestigungselementes (10) schräg zur Längsachse von Steuerhebel (11, 23) und/oder Aufnahme (3) verläuft.

7. Sanitärarmatur nach einem der vorhergehenden Ansprüche, bei der der Steuerhebel (11, 23) eine Angriffsfläche (16, 27) für das Befestigungselement aufweist, die senkrecht zu der Beaufschlagungsrichtung des Befestigungselementes verläuft.

8. Sanitärarmatur nach einem der vorhergehenden Ansprüche, bei der der Steuerhebel (11, 23) mindestens teilweise aus Metall besteht, einen von einer Kunststoffumspritzung (20) umgebenen metallischen Kern (18) aufweist, wobei insbesondere mindestens die Angriffsfläche (16, 27) metallisch ausgebildet ist.

9. Sanitärarmatur nach einem der vorhergehenden Ansprüche, bei der der Steuerhebel (23) mit einem Verstärkungselement (24) verbunden bzw. versehen ist, insbesondere durch eine Kunststoffumspritzung.

10. Sanitärarmatur nach Anspruch 9, bei der das Verstärkungselement eine Hülse aus einem gezogenen Blechnapf ist und/oder ein Stanzteil aus Blech ist, das um einen Kunststoffkern herumgelegt und/oder herumgebogen und/ oder auf diesen aufgesteckt und ggf. geschraubt ist.

11. Sanitärarmatur nach Anspruch 9 oder 10, bei der das Verstärkungselement bis zur Drehachse reicht.

12. Sanitärarmatur nach Anspruch 9 oder 10, bei der das Verstärkungselement vor der Drehachse endet.

13. Sanitärarmatur nach einem der Ansprüche 9 bis 12, bei der das Verstärkungselement den Angriffspunkt des Befestigungselementes abdeckt.

14. Sanitärarmatur nach einem der vorhergehenden Ansprüche, bei der das Verstärkungselement im Bereich des Befestigungselementes eine Fläche aufweist, die senkrecht zur Angriffsrichtung des Befestigungselementes, insbesondere der Druckschraube, verläuft.

15. Sanitärarmatur nach einem der Ansprüche 9 bis 14, bei der das gebogene oder hülsenförmige Verstärkungselement mit Kunststoff ausgespritzt ist.

16. Sanitärarmatur nach einem der vorhergehenden Ansprüche, bei der das Befestigungselement als Zugschraube (33) ausgebildet ist.

17. Sanitärarmatur nach Anspruch 16, bei der die Zugschraube (33) in eine den Endbereich des Steuerhebels (11) durchquerende, insbesondere schräg durchquerende, Bohrung (30) eingreift und/oder zwischen der Außenseite der Aufnahme (5) und der entgegengesetzten Seite des Steuerhebels (11) angreift.

18. Sanitärarmatur nach Anspruch 16 oder 17, bei der die Zugschraube (33) mit einem Schraubenkopf (36) und einer Mutter angreift.

19. Sanitärarmatur nach einem der Ansprüche 16 bis 18, bei der die Querbohrung (30) des Steuerhebels (11) ein Gewinde aufweist, in das die Zugschraube (33) eingreift.

20. Sanitärarmatur nach einem der Ansprüche 16 bis 19, bei der das freie Ende (37) der Zugschraube (33) eine über den Steuerhebel (11) hinausragende und in eine Ausnehmung (34) der Aufnahme (3) eingreifende Verlängerung aufweist.

## Claims

1. Sanitary fitting having
1.1 a control lever (11, 23) for operating the fitting, the control lever having at its free end an angular cross-section,
1.2 an operating handle, which
1.2.1 has a receptacle (3) for the control lever (11, 23), whose cross-section is adapted to the free angular end of the control lever (11, 23), and
1.2.2 a fixing element, which
1.2.2.1 acts on the angular end of the control lever (11, 23) mounted in the receptacle (3) at right angles to its longitudinal direction, in which
1.3 the receptacle (3) has at least two contact surfaces (4, 5) for the control lever (11, 23),
1.3.1 against which acts the angular end of the control lever (11, 23), **characterized in that**
1.3.2 the at least two contact surfaces (4, 5) are at a wedge angle to one another in a cross-section through the receptacle (3).

2. Sanitary fitting according to claim 1, wherein the end of the control lever (11, 23) adapted to the operating handle receptacle (3) has a trapezoidal cross-section.

3. Sanitary fitting according to claim 1 or 2, wherein the contact surfaces (4, 5) also form a wedge angle with one another in a longitudinal section through the receptacle (3).

4. Sanitary fitting according to one of the preceding claims, wherein the end of the control lever (12, 23) adapted to the receptacle (3) tapers in the direction of the free end of the control lever (11, 23).

5. Sanitary fitting according to claim 4, wherein the end of the control lever (11, 23) adapted to the receptacle (3) has a truncated pyramid shape and/or a conical or truncated cone shape.

6. Sanitary fitting according to one of the preceding claims, wherein the action direction of the fixing element (10) is inclined to the longitudinal axis of the control lever (11, 23) and/or the receptacle (3).

7. Sanitary fitting according to one of the preceding claims, wherein the control lever (11, 23) has a contact surface (16, 27) for the fixing element, which is perpendicular to the action direction of the fixing element.

8. Sanitary fitting according to one of the preceding claims, wherein the control lever (11, 23) is at least partly made from metal, has a metal core (18) surrounded by a plastic moulding (20) and in particular at least the contact surface (16, 27) is metallic.

9. Sanitary fitting according to one of the preceding claims, wherein the control lever (23) is connected or provided with a reinforcing element (24), particularly by plastic moulding.

10. Sanitary fitting according to claim 9, wherein the reinforcing element is a sleeve of a drawn sheet metal cup and/or a sheet metal punched part, which is placed and/or bent around a plastic core and/or is mounted and optionally screwed thereon.

11. Sanitary fitting according to claim 9 or 10, wherein the reinforcing element extends up to the rotation axis.

12. Sanitary fitting according to claim 9 or 10, wherein the reinforcing element terminates upstream of the rotation axis.

13. Sanitary fitting according to one of the claims 9 to 12, wherein the reinforcing element covers the contact point of the fixing element.

14. Sanitary fitting according to one of the preceding claims, wherein the reinforcing element has in the vicinity of the fixing element a surface running perpendicular to the engagement direction of the fixing element, particularly the pressure screw.

15. Sanitary fitting according to one of the claims 9 to 14, wherein plastic is injection moulded onto the bent or sleeve-like reinforcing element.

16. Sanitary fitting according to one of the preceding claims, wherein the fixing element is constructed as a draw-in screw (33).

17. Sanitary fitting according to claim 16, wherein the draw-in screw (33) engages in a bore (30) traversing, particularly in sloping manner the end region of the control lever (11) and/or engages between the outside of the receptacle (5) and the opposite side of the control lever (11).

18. Sanitary fitting according to claim 16 or 17, wherein the draw-in screw (33) engages with a screw head (36) and a nut.

19. Sanitary fitting according to one of the claims 16 to 18, wherein the transverse bore (30) of the control lever (11) has a thread in which engages the draw-in screw (33).

20. Sanitary fitting according to one of the claims 16 to 19, wherein the free end (37) of the draw-in screw (33) has an extension extending beyond the control lever (11) and engaging in a recess (34) of the receptacle (3).

## Revendications

1. Robinetterie de sanitaire comprenant
1.1 un levier de commande (11, 23) pour actionner la robinetterie, le levier de commande présentant sur son extrémité libre une section transversale à bords vifs,
1.2 une poignée d'actionnement,
1.2.1 qui présente un logement (3) pour le levier de commande (11, 23) qui est adapté en section transversale à l'extrémité libre à bords vifs du levier de commande (11, 23) ainsi
1.2.2 qu'un élément de fixation
1.2.2.1 qui fait subir un impact à l'extrémité à bords vifs placée dans le logement (3) du levier de commande (11, 23), transversalement à sa direction longitudinale,
1.3 le logement(3) présentant au moins deux surfaces de logement (4,5) pour le levier de commande (11; 23),
1.3.1 lesquelles font subir leur impact à l'extrémité à bords vifs du levier de commande (11, 23), **caractérisé en ce qu'**
1.3.2 au moins les deux surfaces d'application (4, 5) s'étendent dans une section transversale à travers le logement en formant un angle de bords d'attaque l'une par rapport à l'autre.

2. Robinetterie de sanitaire selon la revendication 1, où l'extrémité du levier de commande (11, 23) qui est adaptée au logement (3) de la poignée d'actionnement présente une section transversale trapézoïdale.

3. Robinetterie de sanitaire selon la revendication 1 ou 2, où les surfaces d'application (4, 5) forment également un angle de bords d'attaque l'une avec l'autre également dans une coupe longitudinale à travers le logement (3).

4. Robinetterie de sanitaire selon l'une des revendications précédentes, où l'extrémité adaptée au logement (3) du levier de commande (11, 23) se termine en cône en direction de l'extrémité libre du levier de commande (11, 23).

5. Robinetterie de sanitaire selon la revendication 4, où l'extrémité adaptée au logement (3) du levier de commande (11, 23) présente une forme de pyramide tronquée et/ou une forme cunéiforme et/ou une forme tronconique.

6. Robinetterie de sanitaire selon l'une des revendications précédentes, où la direction d'impact de l'élément de fixation (10) s'étend en plan incliné par rapport à l'axe longitudinal du levier de commande (11, 23) et/ou du logement (3).

7. Robinetterie de sanitaire selon l'une des revendications précédentes, où le levier de commande (11, 23) présente une surface d'attaque (16, 27) pour l'élément de fixation qui s'étend perpendiculairement à la direction d'impact de l'élément de fixation.

8. Robinetterie de sanitaire selon l'une des revendications précédentes, où le levier de commande (11, 23) se compose au moins partiellement de métal, d'un noyau métallique (18) entouré d'un moulage de matière plastique par injection (20), en particulier au moins la surface d'attaque (16, 27) est métallique.

9. Robinetterie de sanitaire selon l'une des revendications précédentes, où le levier de commande (23) est relié respectivement muni d'un élément de renfort (24) en particulier par un moulage en matière plastique.

10. Robinetterie de sanitaire selon la revendication 9, où l'élément de renfort est une gaine réalisée à partir d'une coque de tôle emboutie et/ou d'une pièce d'estampage en tôle qui est placée et/ou pliée autour d'un noyau en matière plastique et/ou coiffée et le cas échéant vissée sur ce dernier.

11. Robinetterie de sanitaire selon la revendication 9 ou 10, où l'élément de renfort va jusqu'à l'axe de rotation.

12. Robinetterie de sanitaire selon la revendication 9, où l'élément de renfort se termine devant l'axe de rotation.

13. Robinetterie de sanitaire selon l'une des revendications 9 à 12, où l'élément de renfort couvre le point d'attaque de l'élément de fixation.

14. Robinetterie de sanitaire selon l'une des revendications précédentes, où l'élément de renfort présente dans la zone de l'élément de fixation une surface qui s'étend perpendiculairement à la direction d'attaque de l'élément de fixation, en particulier de la vis de pression.

15. Robinetterie de sanitaire selon l'une des revendications 9 à 14 où l'élément de renfort courbé ou en forme de gaine est moulée par injection de matière plastique.

16. Robinetterie de sanitaire selon l'une des revendications précédentes, où l'élément de fixation est conçu comme une vis de traction (33).

17. Robinetterie de sanitaire selon la revendication 16, où la vis de traction (33) s'engage dans un perçage (30) traversant la zone d'extrémité du levier de commande (11), traversant en particulier de manière inclinée et/ou attaque entre la face externe du logement (5) et la face opposée du levier de commande (11).

18. Robinetterie de sanitaire selon la revendication 16 ou 17, où la vis de traction (33) attaque avec une tête de vis (36) et un écrou.

19. Robinetterie de sanitaire selon l'une des revendications 16 à 18, où le perçage transversal (30) du levier de commande (11) présente un filet dans lequel s'engage la vis de traction (33).

20. Robinetterie de sanitaire selon l'une des revendications 16 à 19, où l'extrémité libre (37) de la vis de traction (33) présente un prolongement dépassant du levier de commande (11) et s'engageant dans une cavité (34) du logement (3).
